# EUROPÄISCHE PATENTSCHRIFT

(11) **EP 2 261 936 B1**
(45) Veröffentlichungstag und Bekanntmachung des Hinweises auf die Patenterteilung: **11.09.2019**
(21) Anmeldenummer: 10005947.6
(22) Anmeldetag: 09.06.2010
(51) Int. Cl.: H01H 9/02

(54) **FERNSTEUERUNG**
REMOTE CONTROL
TÉLÉCOMMANDE

(30) Priorität: 09.06.2009 DE 202009008197 U
(43) Veröffentlichungstag der Anmeldung: 15.12.2010
(73) Patentinhaber: fm marketing gmbh, 5162 Obertrum am See (AT)
(72) Erfinder: Maier, Ferdinand, 5162 Obertrum am See (AT)
(74) Vertreter: Tamada, Sascha

(56) Entgegenhaltungen:
- US-A1- 2005 197 113
- US-A1- 2007 087 263

## Beschreibung

### Gebiet der Erfindung

Die Erfindung bezieht sich auf eine Fernsteuerung und insbesondere eine Fernsteuerung für Multimedia-Geräte gemäß dem Oberbegriff des Patentanspruches 1.

### Hintergrund der Erfindung

Eine solche Fernsteuerung ist aus der US 2007/087263 A1 bekannt. Dort ist ein Gehäuse eines elektronischen Gerätes gezeigt, das ein Gehäuse und in dem Gehäuse ein Batteriefach hat, wobei das Batteriefach durch einen abnehmbaren Gehäusedeckel verschließbar ist. Der Gehäusedeckel ist durch einen Permanentmagneten am Gehäuse gehalten. Konkret ist dort auf Mobiltelefone Bezug genommen sowie auf PDAs oder ähnliches.

In der US 2005/0197113 A1 ist darauf hingewiesen, dass Mobiltelefone auch als Fernsteuerung für Geräte der Haussteuerung in der Heimelektronik verwendet werden können.

Fernsteuerungen werden durch Batterien mit elektrischer Energie versorgt, wobei unter "Batterie" auch wiederaufladbare Akkus verstanden werden. Die Fernsteuerungen haben zur Aufnahme der Batterien ein in einem Gehäuse angeordnetes Batteriefach, das durch einen abnehmbaren Gehäusedeckel verschlossen ist. Es ist üblich, diese Gehäusedeckel entweder an dem Gehäuse anzuschrauben oder durch formschlüssige Verbindungen, wie Führungsschienen, Rasthaken oder ähnliches mit dem Gehäuse zu verbinden, so daß der Gehäusedeckel während des normalen Betriebes das Batteriefach sicher verschließt.

Zum Auswechseln der Batterien muß der Gehäusedeckel abgenommen werden, was bei vielen Fernsteuerungen umständlich und mühsam ist und in der Praxis auch oft dazu führt, daß der Gehäusedeckel bricht, was die Lebensdauer der Fernsteuerung beeinträchtigt. Auch ist in der Praxis zu beobachten, daß die Gehäusedeckel nicht ausreichend fest am Gehäuse gehalten sind, so daß bei einem Herunterfallen der Fernsteuerung der Deckel aufgeht. Auch treten bei den bekannten Fernsteuerungen nach längerem Gebrauch Materialermüdungen auf, so daß Schiebeführungen oder Rasthaken ihre Funktion nur noch ungenügend erfüllen können und den Gehäusedeckel nicht mehr festhalten.

Gerade bei Fernsteuerungen für Multimedia-Geräte, wie z.B. Fernsehgeräte, Videorecorder, Settopboxen usw., die häufig gebraucht werden, beeinträchtigen die obigen Merkmale den langfristigen störungsfreien Gebrauch.

### Zusammenfassung der Erfindung

Aufgabe der Erfindung ist es daher, die eingangs beschriebene Fernsteuerung dahingehend zu verbessern, daß ein Batteriewechsel wesentlich erleichtert ist, der Batteriedeckel gleichwohl auch langfristig verschleißfrei seine Funktion sicher erfüllt und mit geringem Aufwand an die Außenkontur des Gerätes angepaßt ist.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Nach der Erfindung wird der Gehäusedeckel dadurch durch mindestens einen Permanentmagneten am Gehäuse gehalten, dass ein ferromagnetisches Gegenstück als Metallscheibe oder Metallring ausgebildet ist, der an seinem Außenumfang eine Ringnut aufweist und der in einem Trägerteil formschlüssig verankert ist, wobei das Trägerteil an einer ebenen Deckplatte befestigt ist. Die Batterieaufnahme hat im Bereich des oder der Magneten eine Vertiefung und der Gehäusedeckel im Bereich des zugeordneten ferromagnetischen Gegenstücks einen Vorsprung, der formschlüssig in die Vertiefung eingreift. Dabei ist der mindestens eine Permanentmagnet im Gehäuse befestigt und das dem Permanentmagnet zugeordnete ferromagnetische Gegenstück am Gehäusedeckel. Im zusammengebauten Zustand ist zwischen der Batterieaufnahme und einem Trägerteil ein Spalt vorhanden, wobei ein Rand der Deckplatte in Kontakt mit einer Stirnseite eines Rahmens des Gehäuses steht, wobei an der Stirnseite der Deckelplatte im zusammengebauten Zustand des Gerätes mit einer Außenseite des Rahmens fluchtet.

Am Gehäuse und am Gehäusedeckel sind daher keine mechanisch aufwendigen Führungen oder Rasthaken anzubringen, was für die üblicherweise aus Kunststoff gespritzten Gehäuse und Gehäusedeckel zusätzlich eine wesentliche Vereinfachung und damit Einsparung von Werkzeugkosten mit sich bringt. Die verwendeten Permanentmagneten zeigen keine Ermüdungserscheinungen, so daß auch nach längerer Zeit noch ausreichende Haltekräfte zur Verfügung stehen. Das Abnehmen und Wiederaufsetzen des Gehäusedeckels ist wesentlich vereinfacht. Es müssen nicht bestimmte Bewegungen in bestimmten Richtungen ausgeführt werden. Vielmehr kann der Gehäusedeckel einfach abgehoben oder durch Verschiebung in der Ebene des Gehäusedeckels abgenommen werden. Auch das Wiederaufsetzen des Gehäusedeckels ist einfach, da er sich durch den oder die Magneten automatisch selbst in die "richtige" Lage bringt und damit eine umständliche Handhabung von meist sehr kleinen Führungsschienen entfällt. Auch ist das Schließen des Gehäusedeckels deutlich hörbar. Damit kann es auch nicht mehr vorkommen, daß der Gehäusedeckel nicht richtig "einrastet" und beim späteren Gebrauch abfällt. Insgesamt ist also die "Bedienung" wesentlich vereinfacht und intuitiv leicht zu erfassen.

### Kurzbeschreibung der Zeichnungen

Im folgenden wird die Erfindung anhand eines Ausführungsbeispieles im Zusammenhang mit der Zeichnung ausführlicher erläutert. Es zeigt:
- Fig.1: eine Draufsicht auf einen Teil einer Fernsteuerung mit abgenommenen Gehäusedeckel;
- Fig. 2: eine Draufsicht auf die Innenseite eines abgenommenen Gehäusedeckels;
- Fig. 3: einen Querschnitt einer Fernsteuerung und eines Gehäusedeckels entlang der Linie A-A der Figuren 1 und 2 bei abgenommenem Gehäusedeckel; und
- Fig. 4: einen Querschnitt einer Fernsteuerung mit aufgesetztem Gehäusedeckel.

### Detailierte Beschreibung bevorzugter Ausführungsbeispiele

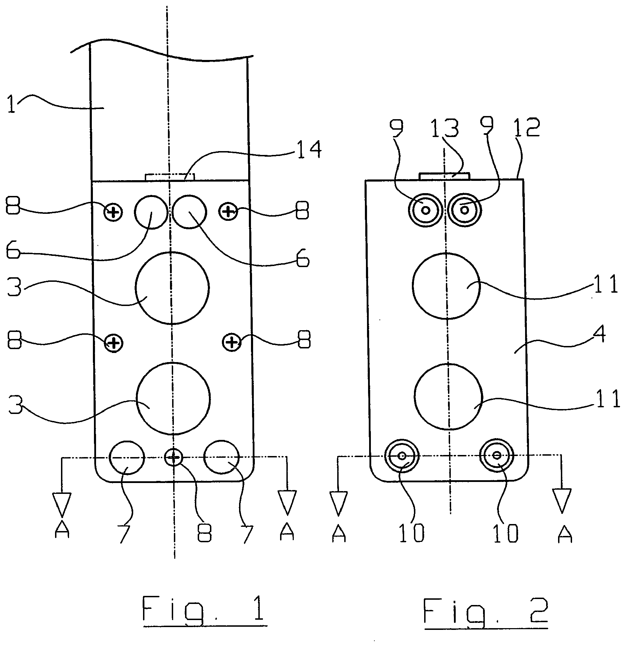

In Fig. 1 ist eine elektronische Fernsteuerung 1 teilweise abgeschnitten dargestellt, die ein Batteriefach 2 aufweist, in das eine oder mehrere Batterien eingesetzt werden können. Im konkreten Fall sind zwei zylindrische Hohlräume 3 zur Aufnahme sog. Knopfzellen vorgesehen. Das Batteriefach 2 ist durch einen Gehäusedeckel 4 verschließbar. Der Gehäusedeckel 4 hat im wesentlichen eine Form einer rechteckigen ebenen Platte, die auf das Batteriefach aufgelegt wird.

Im dargestellten Ausführungsbeispiel sind im Gehäuse der Fernsteuerung 1 im Bereich des Batteriefaches 2 mehrere Permanentmagnete 6 und 7 vorhanden, die in eine Trägerplatte 5 eingepreßt sind, wobei die Trägerplatte 5 durch mehrere Schrauben 8 am Gehäuse befestigt ist.

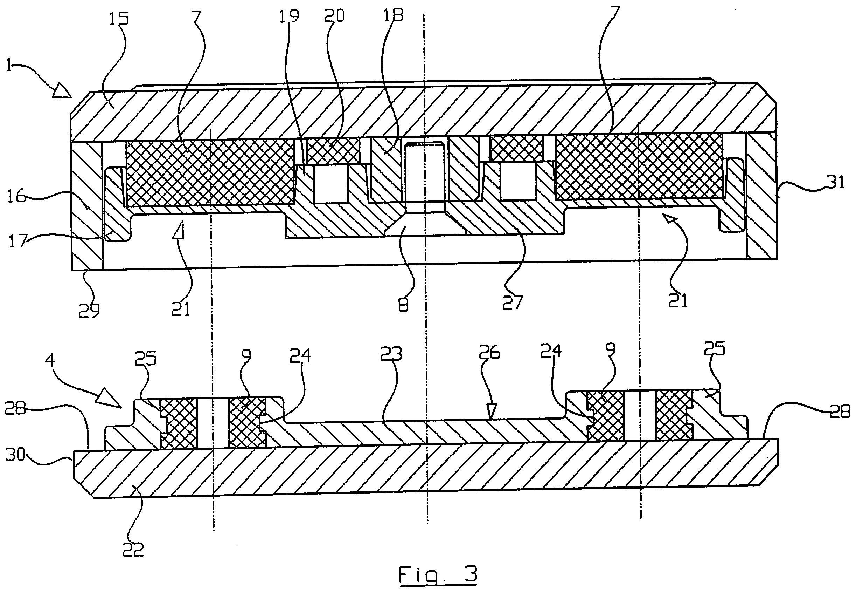

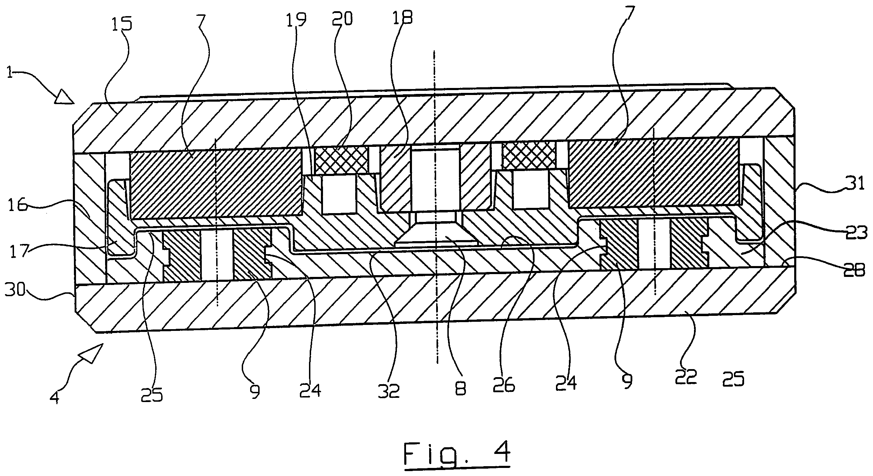

Am Gehäusedeckel 4 sind gegenüberliegend zu den Permanentmagneten 6 und 7 ferromagnetische Gegenstücke 9 und 10 angeordnet, die, wie im Zusammenhang mit den Figuren 3 und 4 noch erläutert wird, in den Gehäusedeckel eingespritzt sind. Weiter ist in Fig. 2 zu erkennen, daß am Gehäusedeckel 4 Vertiefungen 11 vorgesehen sein können, in die die Batterien teilweise hineinragen können. Dieses Merkmal ist jedoch fakultativ und hängt von der Bauhöhe der Fernsteuerung und der Batterien ab.

Ebenfalls fakultativ kann an einer Stirnseite 12 des Gehäusedeckels 4 ein Zentriervorsprung 13 vorgesehen sein, der in eine Zentrieröffnung 14 des Gehäuses 1 eingreift.

Fig. 3 zeigt einen Schnitt durch das Gehäuse der Fernsteuerung 1 und den Gehäusedeckel 4 jeweils längs der Linie A-A der Fig. 1 und 2, wobei der Gehäusedeckel 4 gegenüber dem Gehäuse der Fernsteuerung 1 noch abgehoben ist. Das Gehäuse der Fernsteuerung 1 hat eine Frontplatte 15, die an einem Gehäuserahmen 16 befestigt ist. An der Frontplatte sind die üblichen Bedientasten (nicht dargestellt) angeordnet oder die Frontplatte ist als sog. Touchscreen (berührungsempfindlicher Bildschirm) ausgebildet. An der Frontplatte 15 und dem Gehäuserahmen 16 ist eine Batterieaufnahme 17 befestigt, die als Kunststoff-Spritzgußteil ausgebildet ist und durch die Schraube 8 an einem Gehäuseteil 18 gehalten ist. In die Batteriaufnahme 17 sind die Permanentmagnete 7 eingepresst und zwischen der Innenseite der Frontplatte 15 und einer zur Frontplatte 15 weisenden Seite der Batterieaufnahme 17 gehalten.

Rings um den Bereich der Schraube 8 hat die Batterieaufnahme 17 einen in Richtung zur Frontplatte 15 vorspringenden Rand 19, der an einem elastischen Ring 20 anliegt, der seinerseits an der Innenseite der Frontplatte 15 abgestützt ist, so daß die Batterieaufnahme 17 und damit auch die Magnete 7 elastisch gegenüber dem Gehäuse der Fernsteuerung 1 gehalten sind, um mechanische Spannungen zu vermeiden und mechanische Stöße zu dämpfen, was insbesondere dann von wichtiger Bedeutung ist, wenn die Frontplatte 15 aus Glas ist.

Die Batterieaufnahme 17 hat im Bereich der Magnete 7 Vertiefungen 21, in die die magnetischen Gegenstücke 9 eingreifen können, wodurch auch eine formschlüssige Zentrierung des Gehäusedeckels 4 bewirkt wird.

Der Gehäusedeckel 4 besteht aus einer ebenen Deckelplatte 22 und einem mit ihr verbundenen Trägerteil 23, wobei die Verbindung beispielsweise durch Kleben erfolgt. In das Trägerteil 23, das aus Kunststoff ist, sind die ferromagnetischen Gegenstücke 9 eingespritzt. Die ferromagnetischen Gegenstücke 9 sind hier als Metallscheibe bzw. Metallring aus ferromagnetischem Material ausgebildet, die an ihrem Außenumfang eine Ringnut 24 aufweisen, durch die beim Kunststoffspritzen eine feste Verankerung der ferromagnetischen Gegenstücke 9 erfolgt.

Rings um die ferromagnetischen Gegenstücke 9 hat das Trägerteil 23 einen zylindrischen Vorsprung 25, der an die Vertiefung 21 der Batterieaufnahme 17 angepaßt ist. Daraus ergibt sich, daß das Trägerteil 23 eine mittige Vertiefung 26 aufweist, die wiederum an einen Vorsprung 27 der Batterieaufnahme 17 angepaßt ist. Die entsprechenden Vorsprünge und Vertiefungen greifen beim Aufsetzen des Gehäusedeckels 4 ineinander, so daß eine formschlüssige Zentrierung gewährleistet ist.

Dies ist besser aus Fig. 4 zu erkennen, bei der der Gehäusedeckel 4 aufgesetzt ist. Daraus ist zu erkennen, wie die einzelnen Teile ineinandergreifen und daß die Magnete 7 und die ferromagnetischen Gegenstücke 9 exakt einander gegenüberliegend positioniert sind, so daß der Gehäusedeckel 4 durch Magnetkraft an dem Gerät 1 gehalten ist.

Die Vorsprünge 25 und 27 und die zugeordneten Vertiefungen 21 und 26 sind - wie aus Fig. 4 zu erkennen ist - so dimensioniert, daß ein Rand 28 der Deckelplatte 22 in Kontakt mit einer Stirnseite 29 des Rahmens 16 kommt und damit die Außenseite 30 der Deckelplatte 22 mit der Außenseite 31 des Rahmens 16 bündig fluchtet, so daß dort keine spürbare Kante vorhanden ist. Zwischen den einander gegenüberliegenden Flächen der Batterieaufnahme 17 und des Trägerteiles 23 kann somit im zusammengesetzten Zustand ein kleiner Spalt 32 vorhanden sein, um ein bündiges Anliegen des Randes 28 an der Stirnseite 29 des Rahmens 16 zu gewährleisten.

In dem dargestellten Ausführungsbeispiel sind insgesamt vier Magnete und vier magnetische Gegenstücke dargestellt, die paarweise nahe der Enden des Batteriefaches angeordnet sind. Auch sind die magnetischen Gegenstücke 9 und 10 als Ringscheiben dargestellt. Dem Fachmann ist klar, daß auch eine andere Anordnung und Anzahl von Magneten und eine andere entsprechende Anzahl und Form von magnetischen Gegenstücken möglich ist. Wenn der Gehäusedeckel 4 den in Fig. 2 dargestellten Zentriervorsprung 13 und das Gehäuse der Fernsteuerung 1 die in Fig. 1 dargestellte Zentrieröffnung 14 haben, kann es auch genügen, nur am gegenüberliegenden Ende des Gehäusedeckels 4 einen oder zwei Magnete entsprechend dem Magneten 7 und entsprechend den magnetischen Gegenstücken 10 anzubringen. Weiter ist klar, daß die dargestellten Hohlräume 3 für die Aufnahme von Batterien je nach Art der verwendeten Batterien die entsprechende Form haben, so daß auch die üblichen langgestreckten Batterien eingesetzt werden können.

## Patentansprüche

1. Batteriebetriebene Fernsteuerung (1) mit einem Gehäuse, einem in dem Gehäuse angeordneten Batteriefach und einem das Batteriefach verschließenden, abnehmbaren Gehäusedeckel, wobei der Gehäusedeckel (4) durch mindestens einen Permanentmagneten (6, 7) an dem Gehäuse der Fernsteuerung (1) gehalten ist,
**dadurch gekennzeichnet,**
**dass** der mindestens eine Permanentmagnet (6, 7) in eine Batterieaufnahme (17) eingepresst ist und dass die Batterieaufnahme (17) an dem Gehäuse der Fernsteuerung (1) befestigt, vorzugsweise angeschraubt ist,
**dass** der mindestens eine Permanentmagnet (6, 7) im Gehäuse der Fernsteuerung (1) befestigt ist und an dem Gehäusedeckel (4) mindestens ein dem Permanentmagneten zugeordnetes ferromagnetisches Gegenstück (9) befestigt ist,
**dass** das mindestens eine ferromagnetische Gegenstück (9) eine Metallscheibe oder Metallring (9) ist, der an seinem Außenumfang eine Ringnut (24) aufweist und der in einem Trägerteil (23) formschlüssig verankert ist, wobei das Trägerteil (23) an einer ebenen Deckelplatte (22) befestigt ist,
**dass** die Batterieaufnahme (17) im Bereich des oder der Magneten (6, 7) eine Vertiefung (21) und der Gehäusedeckel (4) im Bereich des zugeordneten ferromagnetischen Gegenstückes (9) einen Vorsprung (25) aufweist, der formschlüssig in die genannte Vertiefung (21) eingreift, **dass** im zusammengebauten Zustand zwischen der Batterieaufnahme (17) und dem Trägerteil (23) ein Spalt (32) vorhanden ist und dass ein Rand (28) der Deckelplatte (22) in Kontakt mit einer Stirnseite (29) eines Rahmens (26) des Gehäuses (1) steht, und
**dass** eine Stirnseite (30) der Deckelplatte (22) im zusammengebauten Zustand der Fernsteuerung mit einer Außenseite (31) des Rahmens (16) fluchtet.

2. Fernsteuerung nach Anspruch 1, **dadurch gekennzeichnet, dass** die Batterieaufnahme (17) elastisch gegenüber dem Gehäuse der Fernsteuerung (1) gelagert ist.

## Claims

1. Battery driven remote control (1) with a housing, a battery compartment arranged in the housing and a removable housing cap closing the battery compartment, wherein the housing cap (4) is hold via at least one permanent magnet (6, 7) at the housing of the remote control (1),
**characterized in**
**that** the at least one permanent magnet (6, 7) is pressed into the battery compartment (17) and that the battery compartment (17) is fixed, preferably screwed, to the housing of the remote control (1), **that** the the at least permanent magnet (6, 7) is fixed in the housing of the remote control (1) and at least one ferromagnetic counterpart (9) is fixed to the housing cap (4) that is allocated to the permanent magnet,
**that** the at least one ferromagnetic counterpart (9) is a metal plate or a metal ring (9) that includes a ring groove (24) at its outer circumference and that is anchored to a carrying member (23) in a form fitted way, wherein the carrying member (23) is fixed to a cap plate (22),
**that** the battery compartment (17) includes in the area of the magnet or the magnets (6, 7) a recess (21) and the housing cap (4) includes in the area of the allocated ferromagnetic counterpart (9) a protrusion (25) that engages into said recess (21) in a form fitted way,
**that** a gap is provided between the battery compartment (17) and the carrying member (23) in an assembled state and that a boundary (28) of the cap plate (22) is in contact with a face side (29) of a frame (26) of the housing (1), and
**that** a face side (30) of the cap plate (22) in an assembled state of the remote control falls in line with a outer side (31) of the frame (16) in the assembled state.

2. Remote control of claim 1, **characterized in that** the battery compartment (17) is elastically supported in respect to the housing of the remote control (1).

## Revendications

1. Télécommande (1) à piles comportant un boîtier, un compartiment à piles disposé dans le boîtier et un couvercle de boîtier amovible qui ferme le compartiment à piles, dans laquelle le couvercle de boîtier (4) est maintenu sur le boîtier de la télécommande (1) par au moins un aimant permanent (6, 7),
**caractérisée**
**en ce que** ledit au moins un aimant permanent (6, 7) est enfoncé dans un support de piles (17) et **en ce que** le support de piles (17) est fixé au boîtier de la télécommande (1), de préférence est vissé,
**en ce que** ledit au moins un aimant permanent (6, 7) est fixé dans le boîtier de la télécommande (1) et au moins une pièce opposée (9) ferromagnétique associée à l'aimant permanent est fixée au couvercle du boîtier (4),
**en ce que** ladite au moins une pièce opposée (9) ferromagnétique (9) est un disque métallique ou anneau métallique (9) qui présente sur sa circonférence extérieure une rainure annulaire (24) et qui est ancré de manière solidaire dans une partie support (23), dans laquelle la partie support (23) est fixée à une plaque de recouvrement plane (22),
**en ce que** le support de piles (17) dans la zone du ou des aimants (6, 7) présente une dépression (21) et le couvercle de boîtier (4) dans la zone de la pièce opposée (9) ferromagnétique associée présente une saillie (25) qui vient en prise positive dans ladite dépression (21),
**en ce que** à l'état monté, il y a un espace (32) entre le support de piles (17) et la partie support (23), et **en ce qu'**un bord (28) de la plaque de recouvrement (22) est en contact avec une face frontale (29) d'un cadre (26) du boîtier (1), et
**en ce que** une face frontale (30) de la plaque de recouvrement (22) est alignée avec une face extérieure (31) du cadre (16) à l'état monté de la télécommande.

2. Télécommande selon la revendication 1, **caractérisée en ce que** le support de piles (17) est monté élastiquement par rapport au boîtier de la télécommande (1).
